# EUROPÄISCHE PATENTSCHRIFT

(11) **EP 1 728 649 B1**
(45) Veröffentlichungstag und Bekanntmachung des Hinweises auf die Patenterteilung: **27.03.2013**
(21) Anmeldenummer: 06113849.1
(22) Anmeldetag: 12.05.2006
(51) Int. Cl.: B60C 11/12, B60C 11/03

(54) **Laufflächenprofil eines Fahrzeugreifens**
Tyre tread profile
Profil de bande de roulement de pneumatique

(30) Priorität: 31.05.2005 DE 102005025366
(43) Veröffentlichungstag der Anmeldung: 06.12.2006
(73) Patentinhaber: Continental Reifen Deutschland GmbH, 30165 Hannover (DE)
(72) Erfinder: Heyden, Arne, 30167, Hannover (DE); Metge, Axel, 30179, Hannover (DE); Wolf, Michaela, 30161, Hannover (DE); Kuhn, Martin, 30171, Hannover (DE); Wiese, Klaus, 30559, Hannover (DE); Pfaff, Daniel, 30938, Burgwedel (DE); Quaranta, Caterina, 30419, Hannover (DE); Jeromin, Dieter, 30419, Hannover (DE)
(74) Vertreter: Finger, Karsten

(56) Entgegenhaltungen:
- EP-A1- 1 459 908
- EP-A2- 1 428 688
- WO-A1-2004/056588

## Beschreibung

Die Erfindung betrifft ein Laufflächenprofil eines Fahrzeugreifens - insbesondere eines Fahrzeugluftreifens -mit einem linken und mit einem rechtem Schulterbereich und mit einem axial zwischen dem linken und dem rechten Schulterbereich ausgebildeten zentralen Laufflächenbereich, mit einer im zentralen Laufflächenbereich zwischen zwei axial von einander beabstandeten Umfangsrillen über den Umfang des Fahrzeugreifens erstreckt ausgebildeten Profilblockreihe aus einer Vielzahl von über den Umfang des Fahrzeugreifens hintereinander und jeweils durch Querrillen von einander getrennt angeordneten Profilblockelementen, wobei die beiden Umfangsrillen die Profilblockelemente in axialer Richtung des Fahrzeugluftreifens und jeweils zwei Querrillen ein Profilblockelement in Umfangrichtung des Fahrzeugluftreifens begrenzen.

Aus der WO 2004/056588 A1 ist ein Laufflächenprofil eines Fahrzeugreifens gemäß den Merkmalen des Oberbegriffs des Anspruchs 1 bekannt.

Aus der EP 1 459 908 A 1 sowie aus der EP 1 428 688 A2 sind ebenfalls Laufflächenprofile eines Fahrzeugreifens bekannt mit Profilblockreihen mit durch Querrillen voneinander beabstandeten Profilblockelementen.

Der Erfindung liegt die Aufgabe zugrunde, bei einem Fahrzeugreifen guten Griff auf Schnee mit gutem Griff auf Eis bei Berücksichtigung der gekrümmten Radienkontur eines Fahrzeugreifens und seiner hierdurch erzieltn Aufstandsfläche zu zu ermöglichen.

Die Aufgabe wird erfindungsgemäß durch die ausbildung eines Laufflächenprofils eines Fahrzeugreifens - insbesondere eines Fahrzeugluftreifens -mit einem linken und mit einem rechtem Schulterbereich und mit einem axial zwischen dem linken und dem rechten Schulterbereich ausgebildeten zentralen Laufflächenbereich, mit einer im zentralen Laufflächenbereich zwischen zwei axial von einander beabstandeten Umfangsrillen über den Umfang des Fahrzeugreifens erstreckt ausgebildeten Profilblockreihe aus einer Vielzahl von über den Umfang des Fahrzeugreifens hintereinander und jeweils durch Querrillen von einander getrennt angeordneten Profilblockelementen, wobei die beiden Umfangsrillen die Profilblockelemente in axialer Richtung des Fahrzeugluftreifens und jeweils zwei Querrillen ein Profilblockelement in Umfangrichtung des Fahrzeugluftreifens begrenzen, gemäß den Merkmalen von Anspruch 1 gelöst, wobei die die Profilblockelemente der Profilblockreihe trennenden Querrillen jeweils -insbesondere von einer der beiden Umfangsrillen ausgehend - über wenigstens die Hälfte ihrer axialen Erstreckung längs ihrer axialen Erstreckung einen gekrümmten Verlauf mit kontinuierlich veränderter Umfangskomponente und somit mit kontinuierlich veränderten Maß ihrer Steigung aufweisen, wobei zumindest ein Teil der Profilblockelemente der Profilblockreihe eine oder mehrere über die gesamte axiale Erstreckung des jeweiligen Profilblockelementes erstreckte erste Feineinschnitte aufweisen, deren Verlauf wenigstens über die Hälfte der axialen Erstreckung des jeweiligen Profilblockelementes entsprechend dem kontinuierlich gekrümmten Verlauf der das Profilblockelement begrenzenten Querrillen mit längs ihrer axialen Erstreckung gekrümmtem Verlauf mit kontinuierlich veränderter Umfangskomponente ausgebildet sind, wobei jeweils mehrere eine Querrille und den zu der Querrille benachbarten Feineinschnitt verbindende und jeweils mehrere zwei jeweils benachbarte Feineinschnitte mit einander verbindende zweite Feineinschnitte im Profilblockelement ausgebildet sind, wobei die zweiten Feineinschnitte mit zur Steigungsrichtung der Querrillen und der ersten Feineinschnitte gegenläufig gerichtetem Steigungsverlauf ausgebildet sind, und wobei die Dicke der zweiten Feineinschnitte größer als die Dicke der ersten Feineinschnitte ist.

Die ersten, schmaleren Feineinschnitte bewirken einen Scheibenwischereffekt, der das Wasser vom Eis herunterwischt, wobei die Krümmung der Querrillen und der ersten Feineinschnitte der Radiusveränderung durch Verkrümmung beim Durchlaufen der Aufstandsfläche entgegenwirken. Die Querrille und die deren Steigungsverlauf entgegengerichteten zweiten, dickeren Feineinschnitte ermöglichen einEindringen von Schnee und eine Verzahnung mit dem Schnee, wobei die gegengerichtete Steigungsrichtung der Querrillen und der zweiten Feineinschnitte in sicheren Griff in Umfangs- und in beide axiale Richtungen im Schnee für gute Traktion, Brems-und Seitenführungseigenschaften ermöglichen.

Besonders vorteilhaft ist die Ausbildung eines Laufflächenprofils gemäß den Merkmalen von Anspruch 2, wobei die in einen ersten Feineinschnitt längs seiner Erstreckungsrichtung von der einen Seite der Erstreckungsrichtung einmündenden zweiten Feineinschnitte in seiner Erstreckungsrichtung versetzt zu den von seiner anderen Seite einmündenden zweiten Feineinschnitte einmünden. Die Feineinschnitte unterteilen das Profil in Segmente, die sich gegenseitig abstützen und verzahnen. Dies ermöglicht hohe Fahrstabilität auch auf schneebedeckter Straße und hohe Kurvenstabilität.

Besonders vorteilhaft ist die Ausbildung eines Laufflächenprofils gemäß den Merkmalen von Anspruch 3, wobei die eine axial die Profilblockreihe begrenzende Umfangsrille eine zentrale Umfangsrille ist. Dies ermöglicht eine verbesserte Wasserverdrängung. Die Wasssermenge wird durchschnitten und nach links und rechts gedrückt. Gleichzeitig wird in der Mittelrille viel Wasser aufgenommen. Dies kann noch weiter dadurch verbessert werden, dass die Profiltiefe im zentralen Bereich tiefer ausgebildet ist als im Schulterbereich.

Besonders vorteilhaft ist die Ausbildung eines Laufflächenprofils gemäß den Merkmalen von Anspruch 4, wobei die Profilblockelemente in ihrem an eine Umfangsrille angrenzenden axialen Erstreckungsbereich eine in eine Umfangsrichtung erstreckte Verlängerung aufweisen, die sich in die in diese Umfangsrichtung das Profilblockelement begrenzende Querrille erstreckt. Dies ermöglicht eine sehr hohe Fahrstabilität und besonders guten Geradeauslauf durch die große vorhandene Gummimenge in diesem Bereich.

Besonders vorteilhaft ist die Ausbildung eines Laufflächenprofils gemäß den Merkmalen von Anspruch 5, wobei die Verlängerung in eine korrespondierend in dem angrenzenden Profilblockelement ausgebildete Ausnehmung reicht. Hierdurch entsteht durch eine Quasi-Verzahnung ein sehr steifer axialer Profilbereich. Außerdem wird ermöglicht, gezielt axiale Bereiche trotz hoher Schneetraktion und guten Eisgriffs sehr steif zu gestalten. Die hohe Steifigkeit dient guten Trockenbremseigenscchaften. Durch Ausbildung eines Spaltes zwischen Ausnehmung und Verlängerung kann darüber hinaus ein Abfluss von Wasser aus der Umfangsrille in die Querrillen ermöglicht werden.

Besonders vorteilhaft ist die Ausbildung eines Laufflächenprofils gemäß den Merkmalen von Anspruch 6, wobei die Verlängerung dreieckförmig oder trapezförmig ausgebildet ist und eine Flanke der Verlängerung Teil der Rillenwand der Umfangsrille ist. Hierdurch können besonders gut Querkräfte aufgenommen werden. Die Fahrstabilität kann positiv beeinflusst werden.

Besonders vorteilhaft ist die Ausbildung eines Laufflächenprofils gemäß den Merkmalen von Anspruch 7, wobei im ersten und im zweiten Schulterbereich jeweils eine Schulterprofilblockreihe mit in Umfangrichtung hintereinander angeordneten und jeweils durch Querrillen voneinander getrennten Schulterprofilblockelementen ausgebildet sind. Die Querrillen ermöglichen das Ableiten von Wasser aus dem Schulterbereich und begünstigen eine gute Schneeverzahnungauch bei Schneematsch. Das Schnee/Eis/Wassergemisch kann gut aufgenommen werden. Besonder günstig ist die Kombination mit geradlinigen Umfangsrillen, die Schulterprofilblockreihen begrenzen. Die geraden Umfangsrillen nehmen sehr gut das Wasser ab.

Besonders vorteilhaft ist die Ausbildung eines Laufflächenprofils gemäß den Merkmalen von Anspruch 8, mit -insbesondere sinusförmigen - Quereinschnitte in den Schulterprofilblockelementen mit - insbesondere parallel zur Erstreckung der die Schulterprofilblockelemnte trennenden Querrillen ausgerichtetm Erstreckungsverlauf. Hierdurch wird eine Optimierung der Seitenführung beim Kurvenfahren und somit des Handlings ermöglicht. Durch die Verwindung eines Profilklotzes beim Durchlaufen beim Abrollen auf der Straßenoberfläche entstehen im Bereich der Feineinschnitte zusätzliche Kanten, die auf nasser Straße den Wasserfilm aufreißen und bei vereister Fahrbahn den sich bildenden Wasserfilm wegschieben.

Besonders vorteilhaft ist die Ausbildung eines Laufflächenprofils gemäß den Merkmalen von Anspruch 9, wobei die Querrillen der Schulterblockreihen im Reifenaufstandsbereich längs ihrer axialen Erstreckung einen gekrümmten Verlauf mit kontinuierlich veränderter Umfangskomponente und somit mit kontinuierlich veränderter Steigung aufweisen, wobei der Steigungsverlauf insbesondere gegenläufig zum Steigungsverlauf der in einer axialen benachbarten Profilblockreihe ausgebildeten Querrillen in deren Übergang in die die benachbarte Profilblockreihe von der Schulterblockreihe trennenden Umfangsrille ausgerichtet ist.Bei Fahrzeugluftreifen ist derÜbergang im Schulterprofil zur Seitenwand hin gebogen. Die Querschnittskontur des Fahrzeugluftreifens hat einen Radius. Das bedeutet, dass der Reifendurchmesser im Schulterbereich geringer als im Zenitbereich ausgebildet ist. Diese Durchmesseränderung wird durch die Biegung der Querrille und gegebenfalls der Feineinschnitte aufgenommen.Auf diese wird ermöglicht, immer eine für Eisgriff optimierte Lamellenstruktur und Lamellenlänge auf der Straßenoberfläche zu halten. Eisgriff und bei gekrümmten Feineinschnitten auch Abstützeffekt der Feineinschnitte zur Versteifung des Profilblockelements werden unterstützt.

Besonders vorteilhaft ist die Ausbildung eines Laufflächenprofils gemäß den Merkmalen von Anspruch 10, wobei die eine axial die Profilblockreihe begrenzende Umfangsrille die Profilblockreihe von einer weiteren zentralen Profilblockreihe axial trennt, wobei diese weitere zentrale Profilblockreihe spiegelbildlich zur ersten Profilblockreihe ausgebildet ist durch Spiegelung an einer durch die die beiden Profilblockreihen trennenden Umfangrille ausgebildeten Ebene. Hierdurch wird die Wasserableitung optimiert.

Besonders vorteilhaft ist die Ausbildung eines Laufflächenprofils gemäß den Merkmalen von Anspruch 11, wobei die weitere zentrale Profilblockreihe spiegelbildlich zur ersten Profilblockreihe ausgebildet ist durch Spiegelung an einer durch die die beiden Profilblockreihen trennenden Umfangrille ausgebildeten Ebene und durch eine zusätzliche Spiegelung an der Rotationsachse des Fahrzeugrades. Die optimierte Profilklotzausrichtung ermöglicht zusätzliche Fahrstabilität. In unterschiedlichsten Fahrzuständen können Kräfte optimiert aufgenommen werden. Das Profil ist nicht laufrichtungsgebunden, so dass der Reifen über alle Radpositionen eines Personenkraftwagens gewechselt werden kann.

Besonders vorteilhaft ist die Ausbildung eines Laufflächenprofils gemäß den Merkmalen von Anspruch 12, wobei die weitere zentrale Profilblock reihedurch eine zusätzliche Translation in Umfangsrichtung des Fahrzeugluftreifens erhalten wird. Dies begünstigt ein verbessertes Schwingungsbild und hierdurch bedingt z.B. eine reduzierte Geräuschentwicklung. Außerdem wird die Seitenführung begünstigt.

Besonders vorteilhaft ist die Ausbildung eines Laufflächenprofils gemäß den Merkmalen von Anspruch 13, wobei die weitere zentrale Profilblockreihe durch eine zusätzliche Streckung bzw Stauchung von Umfangsabschnitten in Umfangsrichtung des Fahrzeugluftreifens erhalten wird Das Schwingungsbild und hierdurch bedingte Effekte können hierdurch verbessert werden. Beispielsweise kann die Geräuschentwicklung während des Fahrens verbessert werden.

Die Erfindung wird im Folgenden an Hand der in den Figuren 1 bis 3 dargestellten Ausführungsbeispielen näher erläutert. Darin zeigen
- Fig. 1: Umfangsausschnitt eines Laufflächenprofils in Draufsicht,
- Fig. 2: Laufflächenprofil von Fig. 1 in Querschnittsdarstellung gemäß Schnitt II-II von Fig. 1 zur Erläuterung des Profiltiefenverlaufs,
- Fig. 3: Schematische Darstellung einer zweiten Ausführungsform eines Laufflächenprofils.

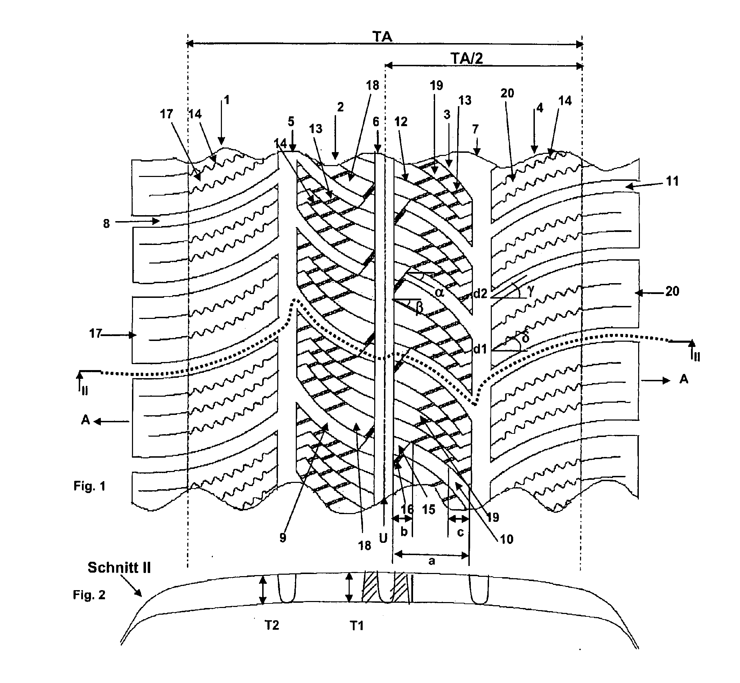

Die Figuren 1 und 2 zeigen ein Laufflächenprofil eines Fahrzeugluftreifens bekannten Aufbaus.

Das Laufflächenprofil ist - wie in Fig. 1 dargestellt - in axialer Richtung A ausgehend von der linken Schulter zur rechten Schulter hin aus einer linken Schulterprofilblockreihe 1, einer linken zentralen Profilblockreihe 2, einer rechten zentralen Profilblockreihe 3 und aus einer rechten Schulterprofilblockreihe 4 ausgebildet. Die Schulterprofilblockreihen 1 und 4 sowie die zentralen Profilblockreihen 2 und 3 erstrecken sich dabei jeweils in Umfangsrichtung U des Fahrzeugluftreifens über den gesamten Umfang des Fahrzeugluftreifens hinweg. Die linke Schulterprofilblockreihe 1 und die linke zentrale Profilblockreihe 2 sind in axialer Richtung A durch eine über den gesamten Umfang des Fahrzeugluftreifens erstreckte und in Umfangsrichtung U geradlinig ausgerichtete Umfangsrille 5 voneinander getrennt. Die zentralen Profilblockreihen 2 und 3 sind in axialer Richtung A durch eine über den gesamten Umfang des Fahrzeugluftreifens erstreckte und in Umfangsrichtung U geradlinig ausgerichtete Umfangsrille 6 axial voneinander getrennt. Die rechte Profilblockreihe 3 und die rechte Schulterprofilblockreihe 4 sind in axialer Richtung durch eine über den gesamten Umfang des Fahrzeugluftreifens erstreckte und in Umfangsrichtung U geradlinig ausgerichtete Umfangsrille 7 axial voneinander getrennt.

Die Schulterprofilblockreihe 1 ist in Umfangsrichtung des Fahrzeugluftreifens aus einer Vielzahl von über den Umfang des Fahrzeugluftreifens verteilten, in Umfangsrichtung U hintereinander angeordneten und jeweils durch eine Querrille 8 voneinander getrennten Profilblockelementen 17 ausgebildet. Die zentrale Profilblockreihe 2 ist in Umfangsrichtung U aus einer Vielzahl von über den Umfang des Fahrzeugluftreifens verteilten, in Umfangsrichtung hintereinander angeordneten und jeweils durch eine Querrille 9 voneinander getrennten Profilblockelementen 18 ausgebildet. Die zentrale Profilblockreihe 3 ist in Umfangsrichtung U aus einer Vielzahl von über den Umfang des Fahrzeugluftreifens verteilten, in Umfangsrichtung hintereinander angeordneten und jeweils durch eine Querrille 10 voneinander getrennten Profilblockelementen 19 ausgebildet. Die Schulterprofilblockreihe 4 ist in Umfangsrichtung des Fahrzeugluftreifens aus einer Vielzahl von über den Umfang des Fahrzeugluftreifens verteilten, in Umfangsrichtung U hintereinander angeordneten und jeweils durch eine Querrille 11 voneinander getrennten Profilblockelementen 20 ausgebildet.

In Fig. 1 ist die Aufstandsbreite TA des Profils bei montiertem Fahrzeugluftreifen im Betriebszustand des Fahrzeugluftreifens eingetragen.

Die Äquatorebene des Fahrzeugluftreifens erstreckt sich durch die Mitte der axialen Breite der Umfangsrille 6, die linke Profilhälfte ist in der in Fig. 1 dargestellten Ausführungsform durch eine Spiegelung der rechten Profilhälfte an der Äquatorebene und durch eine zweite Spiegelung an der Achse des Fahrzeugluftreifens sowie durch eine zusätzliche Translation in Umfangsrichtung des Fahrzeugluftreifens aus der rechten Profilhälfte erzeugt.

Aus diesem Grunde wird das Profil der Einfachheit halber im Folgenden lediglich anhand der rechten Profilhälfte weiter erläutert.

Die Querrillen 10 der Profilblockreihe 3 erstrecken sich in axialer Richtung A ausgehend von der zur Äquatorebene hinweisenden Seite zu der benachbarten Schulterprofilblockreihe 4 mit einer entgegen der eingetragenen Umfangsrichtung U ausgerichteten Umfangskomponente mit längs der axialen Erstreckung in Richtung A zunehmenden Richtungskomponente in Gegenumfangsrichtung und somit mit einem kontinuierlich zunehmenden Steigungswinkel α zur axialen Richtung.

Die Profilblockelemente 19 der Profilblockreihe 3 sind jeweils mit mehreren in Umfangsrichtung U verteilt hintereinander angeordneten querverlaufenden Feineinschnitten 12 ausgebildet, die sich jeweils von der zentralen Umfangsrille 6 bis zu der die zentrale Profilblockreihe 3 von der Schulterprofilblockreihe 4 axial trennenenden Umfangsrille 7 hin erstrecken. Ausgehend von der zentralen Umfangsrille 6 bis zu einer axialen Position im Abstand c von der die Rillenwand 7 bildenden Flanke des jeweiligen Profilblockelementes 19 der Profilblockreihe 3 sind die quer verlaufenden Feineinschnitte 12 jeweils dem Krümmungsverlauf der beiden das jeweilige Profilblockelement in Umfangsrichtung begrenzenden Querrillen 10 entsprechend angepasst mit längs der axialen Erstreckung in Richtung der Achse A entgegen der eingetragenen Umfangsrichtung U gerichteter kontinuierlich zunehmender Umfangskomponente und somit mit einem kontinuierlich über die axiale Erstreckung zunehmenden Steigungswinkel β zur axialen Richtung A gekrümmt ausgebildet.

In jedem Profilblockelement 12 sind darüber hinaus eine Vielzahl nahezu paralleler Feineinschnitte 13 ausgebildet, die einen entgegengesetzt gerichteten Steigungsverlauf über ihre axiale Erstreckung in Richtung A - d.h. mit zunehmender Umfangskomponente, die in Richtung der eingetragenen Umfangsrichtung U weist - aufweisen als die Feineinschnitte 12. Die Feineinschnitte 13 erstrecken sich dabei jeweils von einem Feineinschnitt 12 bis zu dem in Umfangsrichtung benachbarten Feineinschnitt 12 des Profilblockelements 19. Bei den in Umfangsrichtung jeweils ersten und letzten Feineinschnitten 12 eines Profilblockelements 19 erstrecken sich auch derartige Feineinschnitte 13 jeweils zwischen dem Feineinschnitt 12 und der benachbarten Querrille 10 des Profilblockelements 19. Diejenigen Feineinschnitte 13, die jeweils in einen Feineinschnitt 12 einmünden, sind dabei längs der Erstreckung des Feineinschnittes 12 entlang seiner Haupterstreckungsrichtung jeweils so verteilt angeordnet, dass sie in alternierendem Wechsel vom Feineinschnitt 12 ausgehend zur einen Seite der Haupterstreckungsrichtung des Feineinschnittes 12 bzw. zur anderen Seite der Haupterstreckungsrichtung des Feineinschnittes 12 ausgehen. Die Feineinschnitte 12 und die Feineinschnitte 13 zusammen mit den die Profilblockelementen 19 begrenzenden Querrillen 10 bilden in dem axialen mit Feineinschnitten 13 ausgebildeten Erstreckungsbereich eine Art Rautenmuster, bei dem jedoch durch die Krümmung der Querrillen 10 bzw. der Feineinschnitte 12 jeweils zwei gegenüberliegende Rautenseiten gekrümmt und die beiden anderen durch die Feineinschnitte 13 gebildeten Rautenseiten geradlinig ausgebildet sind.

Jeder Feineinschnitt 12 ist in jeder Position quer zu seiner Haupterstreckungsrichtung jeweils mit einer Dicke d₁ ausgebildet. Jeder Feineinschnitt 13 ist in jeder Position quer zu seiner Haupterstreckungsrichtung jeweils mit einer Dicke d₂ ausgebildet. Die Dicke d₁ und die Dicke d₂ ist dabei so gewählt, dass innerhalb eines Profilblockelements 19 jeweils die Dicke d₁ der Feineinschnitte 12 jeweils kleiner ist als die Dicke d₂ der Feineinschnitte 13. Beispielsweise gilt (0,8 d₂) ≥ d₁ ≥ (0,1 d2). In einem Ausführungsbeispiel sind beispielsweise in allen Profilblockelementen 19 die Dicken d₁ und d₂ jeweils so gewählt, dass für d₁ und d₂ gilt: d₁ = (0,5 d₂).

Für die Dicke d₂ der Feineinschnitte gilt: 1,5mm ≥ d₂ ≥ 0,6mm, beispielsweise d₂ = 1mm.

Die Feineinschnitte 12 sind in ihrem Verlauf ausgehend von der Umfangsrille 6 zur Umfangsrille 7 hin jeweils hinsichtlich ihrer Umfangsorientierung im axialen Abstand c von ihrer jeweiligen Einmündung in die Umfangsrille 7 in der die Rillenwand der Umfangsrille 7 bildenden Profilblockflanken des jeweiligen Profilblocks 19 in ihrem Verlauf abgeknickt und erstrecken sich zwischen der Abknickstelle und der Umfangsrille 7 jeweils mit einem Erstreckungsverlauf, der nahezu parallel zu dem Steigungsverlauf der benachbarten Feineinschnitte 13 entspricht.

An jedem Profilblockelement 19 der Profilblockreihe 3 ist an der zu derjenigen in Umfangsrichtung angrenzenden Querrille 10 hin, deren Krümmung einen Krümmungsgradius aufweist, der vollständig vom Profilblockelement 19 wegweist, jeweils in Ihrem axialen zur Umfangsrille 6 weisenden Endabschnitt im axialen Abstand b von der die Rillenwand der Umfangsrille 6 bildenden Flanke des Profilblockelements 19 in dieser Umfangsposition mit einer in Umfangsrichtung erstreckten, dreieckigen Verlängerung 15 ausgebildet, die sich durch die Profilrille 10 in Umfangsrichtung hindurch erstreckt und in eine korrespondierend ausgebildete Ausnehmung 16 in dem in Umfangsrichtung benachbarten Profilblockelement eingreift. Die Verlängerung 15 ist mit der Spitze ihres Dreiecks auf der Rillenwand der Rille 6 ausgebildet, so dass die Profilblockelemente 19 mit den Verlängerungen 15 einen nahezu geschlossene Rillenwand der Rille 6 bilden, die lediglich von den Einmündungen der Feineinschnitte 12 und einem verbleibenden Spalt zwischen Verlängerung 15 des einen Profilblockelementes 19 und der korrespondierenden Ausnehmung 16 des benachbarten Profilblockelementes 19 unterbrochen wird. Die Dicke des verbleibenden Spaltes ist größer gewählt als die Dicke d₂ der Feineinschnitte 13 und ist maximal doppelt so groß wie die Dicke d₂ der Feineinschnitte 13. Für die axialen Abstände c und b, sowie für das Maß a für die gesamte axiale Erstreckung eines Profilblockelementes 19 zwischen Einmündung einer Querrille 10 in die Umfangsrille 6 und derdurch die in die Querrille 10 eingreifenden Verlängerung 15 gebildeten Rillenwand der Umfangsrille 7 gilt: c ≤ (0,3 a) , b ≤ (0,3 a). Beispielsweise sind b und c derart gewählt, dass gilt c ≤ (0,25 a) und b ≤ (0,25 a). Die axiale Erstreckung a ist beispielsweise so gewählt, dass gilt (TA/6) ≤ a < (TA/4) wobei TA die axiale Breite der Aufstandsfläche bei dem auf ein Fahrzeug montierten Betriebszustand ist.

In den Profilblockelementen 20 der Schulterprofilblockreihe 4 sind über die gesamte Erstreckung der Schulterprofilblockelemente innerhalb der axialen Erstreckung der Aufstandsbreite TA jeweils mehrere in Umfangrichtung U hintereinander angeordnete längs ihrer Haupterstreckungsrichtung sinusförmig gewellte Feineinschnitte 14 ausgebildet, wobei die Haupterstreckungsrichtung ausgehend von der Umfangsrille 7 nach axial außen zur Schulter hin jeweils mit einer gleichbleibend entgegengesetzt zur Umfangsorientierung der Querrillen 10 der benachbarten Profilblockreihe 3 gewählten Umfangsorientierung mit in dargestellter Umfangsrichtung U orientierter Umfangskomponente mit einer an der Einmündung in die Umfangsrille 7 maximalen Wert der Umfangskomponente und über die axiale Erstreckung zur Schulter hin kontinuierlich abnehmendem Wert der Umfangskomponente ausgebildet ist. Ebenso sind die Querrillen 11 ausgehend von der Einmündung in die Umfangsrille 7 mit einer in die dargestellte Umfangsrichtung U gewählten Orientierung ihrer Umfangskomponente mit zunächst maximalen Wert der Umfangskomponente und in axialer Richtung zur Schulter hin mit kontinuierlich abnehmendem Wert der Richtungskomponente in Umfangsrichtung ausgebildet. Die Querrillen 11 sind somit mit einem Steigungswinkel y zur Axialen A ausgebildet, der ausgehend von der Umfangsrille 7 nach axial außen hin kontinuierlich abnimmt. Die Feineinschnitte 20 sind entsprechend in ihrem Eimündungsbereich in die Umfangsrille 7 mit einem maximalen Neigungswinkel δ zur Axialen A ausgebildet, der in axialer Richtung zur Schulter hin kontinuierlich abnehmend ausgebildet ist. Der Verlauf der Haupterstreckung der Feineinschnitte 14 und der Verlauf der Erstreckung der zu dem jeweiligen Schulterprofilblockelement 20 angrenzenden Querrillen 11 sind im wesentlichen gleichermaßen gekrümmt verlaufend ausgebildet.

Für die Winkel y und δ gilt: 45° ≤ y ≤ 85° sowie 45° ≤ δ ≤ 85°. Dies gilt über die gesamte axiale Erstreckung der Querrille sowie des Feineinschnittes 14 im Bereich der Reifenaufstandsfläche.

Die sinusförmigen Feineinschnitte 14 sind in einem nicht näher dargestellten Ausführungsbeispiel in ihrem Tiefenverlauf in radialer Richtung des Fahrzeugluftreifens mit zur Radialen gekrümmtem Konturverlauf in nicht näher dargestellter, bekannten Weise als dreidimensional gekrümmter Feineinschnitt ausgebildet.

Wie aus Figur 2 zu erkennen ist ist Tiefe t₁ der Querrillen 10 der zentralen Profilblockreihe 3 größer gewählt als die Tiefe t₂ derQuerrillen 11 der Schulterprofilblockreihe 4, wobei die Tiefe jeweils die maximale radiale Erstreckung zwischen Rillengrund der Rille in einer Erstreckungsposition einer Rille und der radialen Oberfläche der die Rille in dieser Erstreckungsposition begrenzenden Profilblockelemente an der zugehörigen Rillenwand angibt.

Wie oben bereits dargelegt, ist bei dem in den Figuren 1 und 2 dargestellten Laufflächenprofil die links von der zentralen Umfangsrille 6 dargestellte Profilhälfte mit der zentralen Profilblockreihe 2 und der Schulterprofilblockreihe 1 durch zweimalige Spiegelung und eine zusätzliche in Umfangsrichtung durchgeführte Translation aus der rechten oben im Detail näher beschriebenen Profilblockhälfte mit der zentralen Profilblockreihe 3 und der Schulterprofilblockreihe 4 erzeugt. Das oben dargelegte der Ausbildung der zentralen Profilblockreihe 3 mit den Profilblockelementen 19 und den Feineinschnitten 12 und 13 gilt dementsprechend in analoger Weise für die Ausbildung der zentralen Profilblockreihe 2 mit den Profilblockelementen 18 und den Feineinschnitten 22 und 23. Ebenso gilt das zu der Schulterprofilblockreihe 4 mit den Schulterprofilblockelementen 20 und den Feineinschnitten 14 dargelegte dementsprechend in analoger Weise für die Schulterprofilblockreihe 1 mit den Profilblockelementen 17 und den Feineinschnitten 24.

Das in Fig. 1 und 2 dargestellte Laufflächenprofil ist hierdurch ein laufrichtungsungebundenes Profil.

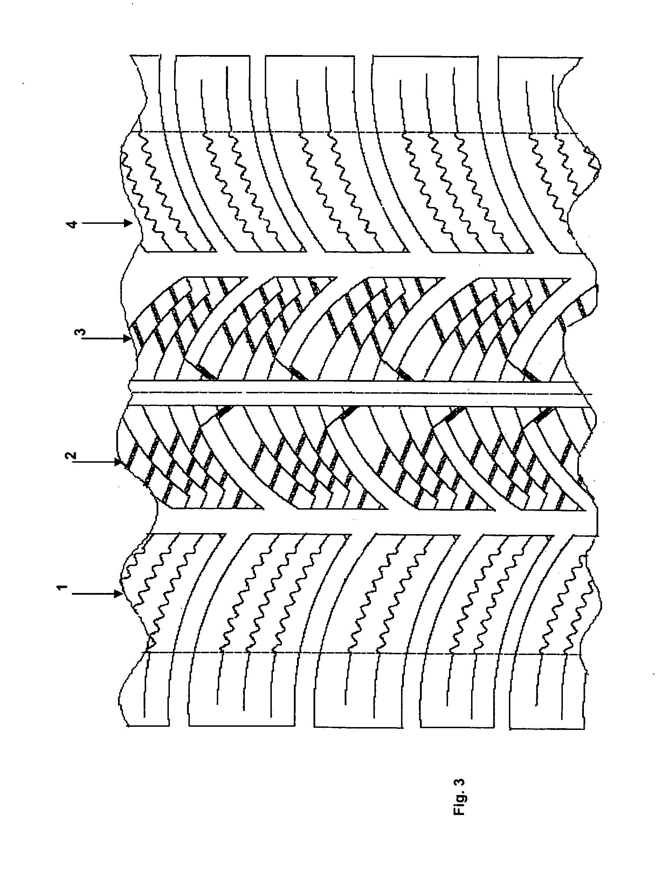

Fig. 3 zeigt ein alternatives Laufflächenprofil, bei dem die rechte Seite wie die rechte Seite bei dem in den Figuren 1 und 2 dargestellten Laufflächenprofil ausgebildet ist und bei dem die linke Seite durch eine einfache Spiegelung an der Äquatorebene und durch eine zusätzliche Translation in Umfangsrichtung erzeugt wurde. Das hierdurch erzielte Profil ist ein laufrichtungsgebundenes Profil.

### Bezugszeichenliste

### (Teil der Beschreibung)

- 1: Schulterprofilblockreihe
- 2: Profilblockreihe
- 3: Profilblockreihe
- 4: Schulterprofilblockreihe
- 5: Umfangsrille
- 6: Umfangsrille
- 7: Umfangsrille
- 8: Querrille
- 9: Querrille
- 10: Querrille
- 11: Querrille
- 12: Feineinschnitt
- 13: Feineinschnitt
- 14: Feineinschnitt
- 15: Verlängerung
- 16: Ausnehmung
- 17: Profilblockelement
- 18: Profilblockelement
- 19: Profilblockelement
- 20: Profilblockelement
- 22: Feineinschnitt
- 23: Feineinschnitt
- 24: Feineinschnitt

## Patentansprüche

1. Laufflächenprofil eines Fahrzeugreifens - insbesondere eines Fahrzeugluftreifens -mit einem linken und mit einem rechtem Schulterbereich und mit einem axial zwischen dem linken und dem rechten Schulterbereich ausgebildeten zentralen Laufflächenbereich, mit einer im zentralen Laufflächenbereich zwischen zwei axial von einander beabstandeten Umfangsrillen (6,7) über den Umfang des Fahrzeugreifens erstreckt ausgebildeten Profilblockreihe (3) aus einer Vielzahl von über den Umfang des Fahrzeugreifens hintereinander und jeweils durch Querrillen (10) von einander getrennt angeordneten Profilblockelementen (19), wobei die beiden Umfangsrillen (6,7) die Profilblockelemente (19) in axialer Richtung des Fahrzeugluftreifens und jeweils zwei Querrillen (10) ein Profilblockelement (19) in Umfangrichtung des Fahrzeugluftreifens begrenzen,
wobei die die Profilblockelemente (19) der Profilblockreihe (3) trennenden Querrillen (10) jeweils -insbesondere von einer der beiden Umfangsrillen (6,7) ausgehend - über wenigstens die Hälfte ihrer axialen Erstreckung längs ihrer axialen Erstreckung einen gekrümmten Verlauf mit kontinuierlich veränderter Umfangskomponente und somit mit kontinuierlich veränderten Maß ihrer Steigung aufweisen,
wobei zumindest ein Teil der Profilblockelemente (19) der Profilblockreihe (3) eine oder mehrere über die gesamte axiale Erstreckung des jeweiligen Profilblockelementes (19) erstreckte erste Feineinschnitte (12) aufweisen, deren Verlauf wenigstens über die Hälfte der axialen Erstreckung des jeweiligen Profilblockelementes (19) entsprechend dem kontinuierlich gekrümmten Verlauf der das Profilblockelement (19) begrenzenten Querrillen (10) mit längs ihrer axialen Erstreckung gekrümmtem Verlauf mit kontinuierlich veränderter Umfangskomponente ausgebildet sind,
wobei jeweils mehrere zwei jeweils benachbarte Feineinschnitte (12) mit einander verbindende zweite Feineinschnitte (13) im Profilblockelement (19) ausgebildet sind und die Dicke der zweiten Feineinschnitte (13) größer als die Dicke der ersten Feineinschnitte (12) ist,
**dadurch gekennzeichnet,**
**dass** jeweils auch mehrere eine Querrille (10) und den zu der Querrille (10) benachbarten Feineinschnitt (12) verbindende zweite Feineinschnitte (13) im Profilblockelement (19) ausgebildet sind und die Dicke der zweiten Feineinschnitte (13) größer als die Dicke der ersten Feineinschnitte (12) ist,
und **dass** die zweiten Feineinschnitte (13) mit zur Steigungsrichtung der Querrillen (10) und der ersten Feineinschnitte (12) gegenläufig gerichtetem Steigungsverlauf ausgebildet sind.

2. Laufflächenprofil gemäß den Merkmalen von Anspruch 1,
wobei die in einen ersten Feineinschnitt (12) längs seiner Erstreckungsrichtung von der einen Seite mündenden zweiten Feineinschnitte (13) in seiner Erstreckungsrichtung versetzt zu der von seiner anderen Seite einmündenden zweiten Feineinschnitte (13) einmünden.

3. Laufflächenprofil gemäß den Merkmalen von Anspruch 1 oder 2,
wobei die eine axial die Profilblockreihe (3) begrenzende Umfangsrille (6) eine zentrale Umfangsrille ist.

4. Laufflächenprofil gemäß den Merkmalen von Anspruch 1,2 oder 3,
wobei die Profilblockelemente (19) in ihrem an eine Umfangsrille (6) angrenzenden axialen Erstreckungsbereich eine in eine Umfangsrichtung erstreckte Verlängerung (15) aufweisen, die sich in die in diese Umfangsrichtung das Profilblockelement (19) begrenzende Querrille (10) erstreckt.

5. Laufflächenprofil gemäß den Merkmalen von Anspruch 4,
wobei die Verlängerung (15) in eine korrespondierend in dem angrenzenden Profilblockelement (19) ausgebildete Ausnehmung (16) reicht.

6. Laufflächenprofil gemäß den Merkmalen von Anspruch 4 oder 5,
wobei die Verlängerung (15) dreieckförmig oder trapezförmig ausgebildet ist und eine Flanke der Verlängerung (15) Teil der Rillenwand der Umfangsrille (6) ist.

7. Laufflächenprofil gemäß den Merkmalen von einem oder mehreren der vorangegangenen Ansprüche,
wobei im ersten und im zweiten Schulterbereich jeweils eine Schulterprofilblockreihe (1,4) mit in Umfangrichtung hintereinander angeordneten und jeweils durch Querrillen (8,11) voneinander getrennten Schulterprofilblockelementen (17,20) ausgebildet sind.

8. Laufflächenprofil gemäß den Merkmalen von Anspruch 7,
mit -insbesondere sinusförmigen -Quereinschnitten (14) in den Schulterprofilblockelementen (17,20) mit - insbesondere parallel zur Erstreckung der die Schulterprofilblockelemente (17,20) trennenden Querrillen (8,11) ausgerichtetem Erstreckungsverlauf.

9. Laufflächenprofil gemäß den Merkmalen von Anspruch 7 oder 8,
wobei die Querrillen (8,11) der Schulterblockreihen (1,4) im Reifenaufstandsbereich längs ihrer axialen Erstreckung einen gekrümmten Verlauf mit kontinuierlich veränderter Umfangskomponente und somit mit kontinuierlich veränderter Steigung aufweisen, wobei der Steigungsverlauf insbesondere gegenläufig zum Steigungsverlauf der in einer axialen benachbarten Profilblockreihe (2,3) ausgebildeten Querrillen (9,10) in deren Übergang in die die benachbarte Profilblockreihe (2,3) von der Schulterblockreihe (1,4) trennenden Umfangsrille (5,7) ausgerichtet ist.

10. Laufflächenprofil gemäß den Merkmalen von einem oder mehreren der vorangegangenen Ansprüche,
wobei die eine axial die Profilblockreihe (3) begrenzende Umfangsrille (6) die Profilblockreihe (3) von einer weiteren zentralen Profilblockreihe (2) axial trennt,
wobei diese weitere zentrale Profilblockreihe (2) spiegelbildlich zur ersten Profilblockreihe (3) ausgebildet ist durch Spiegelung an einer durch die die beiden Profilblockreihen (2,3) trennenden Umfangrille (6) ausgebildeten Ebene.

11. Laufflächenprofil gemäß den Merkmalen von Anspruch 10,
wobei die weitere zentrale Profilblockreihe (2) spiegelbildlich zur ersten Profilblockreihe (3) ausgebildet ist durch Spiegelung an einer durch die die beiden Profilblockreihen (2,3) trennenden Umfangrille (6) ausgebildeten Ebene und durch eine zusätzliche Spiegelung an der Rotationsachse des Fahrzeugrades.

12. Laufflächenprofil gemäß den Merkmalen von Anspruch 10 oder 11,
wobei die weitere zentrale Profilblockreihe (2) durch eine zusätzliche Translation in Umfangsrichtung des Fahrzeugluftreifens erhalten wird.

13. Laufflächenprofil gemäß den Merkmalen von Anspruch 10, 11 oder 12,
wobei die weitere zentrale Profilblockreihe (2) durch eine zusätzliche Streckung bzw Stauchung von Umfangsabschnitten in Umfangsrichtung des Fahrzeugluftreifens erhalten wird.

## Claims

1. Tread profile of a vehicle tyre - in particular of a pneumatic vehicle tyre - with a left shoulder region and a right shoulder region and with a central tread region formed axially between the left shoulder region and the right shoulder region, with a row of profile blocks (3), formed so as to extend over the circumference of the vehicle tyre in the central tread region between two circumferential channels (6, 7) spaced apart axially from each other and comprising a multiplicity of profile block elements (19) arranged one behind the other over the circumference of the vehicle tyre and respectively separated from one another by transverse channels (10), the two circumferential channels (6, 7) delimiting the profile block elements (19) in the axial direction of the pneumatic vehicle tyre and two transverse channels (10) respectively delimiting a profile block element (19) in the circumferential direction of the pneumatic vehicle tyre, wherein the transverse channels (10) separating the profile block elements (19) of the row of profile blocks (3) respectively have - in particular extending from one of the two circumferential channels (6, 7) - over at least half their axial extent a curved path along their axial extent, with a continuously changed circumferential component, and consequently with a continuously changed degree of their pitch, wherein at least some of the profile block elements (19) of the row of profile blocks (3) have one or more first sipes (12), which are made to extend over the entire axial extent of the respective profile block element (19) and the path of which is formed at least over half the axial extent of the respective profile block element (19) so as to correspond to the continuously curved path of the transverse channels (10) delimiting the profile block element (19), with a path that is curved along their axial extent and has a continuously changed circumferential component, wherein in each case a number of second sipes (13), connecting two respectively neighbouring sipes (12) to one another, are formed in the profile block element (19) and the thickness of the second sipes (13) is greater than the thickness of the first sipes (12), **characterized in that** in each case a number of second sipes (13), connecting a transverse channel (10) and the sipe (12) that is neighbouring the transverse channel (10), are also formed in the profile block element (19) and the thickness of the second sipes (13) is greater than the thickness of the first sipes (12), and **in that** the second sipes (13) are formed with a progression of the pitch directed oppositely to the direction of the pitch of the transverse channels (10) and of the first sipes (12).

2. Tread profile according to the features of Claim 1, wherein the second sipes (13), opening out into a first sipe (12) from one side along its direction of extent, open out offset in its direction of extent in relation to the second sipes (13) opening out into it from its other side.

3. Tread profile according to the features of Claim 1 or 2, wherein the circumferential channel (6) axially delimiting the row of profile blocks (3) is a central circumferential channel.

4. Tread profile according to the features of Claim 1, 2 or 3, wherein the profile block elements (19) have in their axial region of extent adjoining a circumferential channel (6) an extension (15) that is made to extend in a circumferential direction and extends into the transverse channel (10) delimiting the profile block element (19) in this circumferential direction.

5. Tread profile according to the features of Claim 4, wherein the extension (15) reaches into a recess (16) formed correspondingly in the adjacent profile block element (19).

6. Tread profile according to the features of Claim 4 or 5, wherein the extension (15) is of a triangular or trapezoidal form and a flank of the extension (15) is part of the channel wall of the circumferential channel (6).

7. Tread profile according to the features of one or more of the preceding claims, wherein in the first shoulder region and in the second shoulder region there is respectively formed a shoulder row of profile blocks (1, 4) with shoulder profile block elements (17, 20) arranged one behind the other in the circumferential direction and respectively separated from one another by transverse channels (8, 11).

8. Tread profile according to the features of Claim 7, with - in particular sinusoidal - transverse sipes (14) in the shoulder profile block elements (17, 20) with a path of extent that is in particular aligned parallel to the extent of the transverse channels (8, 11) separating the shoulder profile block elements (17, 20).

9. Tread profile according to the features of Claim 7 or 8, wherein the transverse channels (8, 11) of the shoulder rows of blocks (1, 4) have in the tyre contact region along their axial extent a curved path with a continuously changed circumferential component, and consequently with a continuously changed pitch, wherein the progression of the pitch is aligned in particular oppositely to the progression of the pitch of the transverse channels (9, 10) formed in an axially neighbouring row of profile blocks (2, 3) in the transition of said channels into the circumferential channel (5, 7) separating the neighbouring row of profile blocks (2, 3) from the shoulder row of blocks (1, 4).

10. Tread profile according to the features of one or more of the preceding claims, wherein the one circumferential channel (6) axially delimiting the row of profile blocks (3) axially separates the row of profile blocks (3) from a further central row of profile blocks (2), wherein this further central row of profile blocks (2) is formed mirror-invertedly in relation to the first row of profile blocks (3), by mirror-inversion at a plane formed by the circumferential channel (6) separating the two rows of profile blocks (2, 3).

11. Tread profile according to the features of Claim 10, wherein the further central row of profile blocks (2) is formed mirror-invertedly in relation to the first row of profile blocks (3) by mirror-inversion at a plane formed by the circumferential channel (6) separating the two rows of profile blocks (2, 3) and by an additional mirror-inversion at the axis of rotation of the vehicle wheel.

12. Tread profile according to the features of Claim 10 or 11, wherein the further central row of profile blocks (2) is obtained by an additional translation in the circumferential direction of the pneumatic vehicle tyre.

13. Tread profile according to the features of Claim 10, 11 or 12, wherein the further central row of profile blocks (2) is obtained by an additional stretching or compressing of circumferential portions in the circumferential direction of the pneumatic vehicle tyre.

## Revendications

1. Profil de bande de roulement d'un bandage de véhicule - notamment d'un pneu de véhicule - comprenant une région d'épaulement gauche et une région d'épaulement droite et une région centrale de bande de roulement réalisée axialement entre la région d'épaulement gauche et la région d'épaulement droite, avec une rangée de blocs profilés (3) étendue sur la périphérie du pneu de véhicule, réalisée dans la région centrale de la bande de roulement entre deux rainures périphériques (6, 7) espacées axialement l'une de l'autre, constituée d'une pluralité d'éléments de blocs profilés (19) disposés les uns derrière les autres sur la périphérie du bandage de véhicule et à chaque fois de manière séparée les uns des autres par des rainures transversales (10), les deux rainures périphériques (6, 7) limitant les éléments de blocs profilés (19) dans la direction axiale du pneu de véhicule et à chaque fois deux rainures transversales (10) limitant un élément de bloc profilé (19) dans la direction périphérique du pneu de véhicule,
les rainures transversales (10) séparant les éléments de blocs profilés (19) de la rangée de blocs profilés (3) présentant à chaque fois - notamment à partir de l'une des deux rainures périphériques (6, 7) - sur au moins la moitié de leur étendue axiale, le long de leur étendue axiale, une allure courbée avec une composante périphérique variant de manière continue et donc avec une dimension de pas variant de manière continue,
au moins une partie des éléments de blocs profilés (19) de la rangée de blocs profilés (3) présentant une ou plusieurs premières fines entailles (12) s'étendant sur toute l'étendue axiale de l'élément de bloc profilé respectif (19), dont l'allure est réalisée au moins sur la moitié de l'étendue axiale de l'élément de bloc profilé respectif (19) de manière à correspondre à l'allure courbée de manière continue des rainures transversales (10) limitant l'élément de bloc profilé (19), avec une allure courbée le long de leur étendue axiale avec une composante périphérique variant de manière continue,
à chaque fois plusieurs deuxièmes fines entailles (13), reliant l'une à l'autre deux entailles fines adjacentes (12) l'une à l'autre, étant réalisées dans l'élément de bloc profilé (19) et l'épaisseur des deuxièmes fines entailles (13) étant supérieure à l'épaisseur des premières fines entailles (12),
**caractérisé en ce que**
plusieurs deuxièmes fines entailles (13), reliant une rainure transversale (10) et la fine entaille (12) adjacente à la rainure transversale (10), étant aussi à chaque fois réalisées dans l'élément de bloc profilé (19) et l'épaisseur des deuxièmes fines entailles (13) étant supérieure à l'épaisseur des premières fines entailles (12),
et **en ce que** les deuxièmes fines entailles (13) sont réalisées avec une allure de pas orientée en sens inverse de la direction du pas des rainures transversales (10) et des premières fines entailles (12).

2. Profil de bande de roulement selon les caractéristiques de la revendication 1,
dans lequel les deuxièmes fines entailles (13) débouchant dans une première fine entaille (12) le long de sa direction d'étendue depuis un côté débouchent dans sa direction d'étendue de manière décalée par rapport aux deuxièmes fines entailles (13) débouchant depuis son autre côté.

3. Profil de bande de roulement selon les caractéristiques de la revendication 1 ou 2, dans lequel la rainure périphérique (6) limitant axialement la rangée de blocs profilés (3) est une rainure périphérique centrale.

4. Profil de bande de roulement selon les caractéristiques de la revendication 1, 2 ou 3, dans lequel les éléments de blocs profilés (19) présentent, dans leur région d'étendue axiale adjacente à une rainure périphérique (6), un prolongement (15) s'étendant dans une direction périphérique, qui s'étend dans la rainure transversale (10) limitant dans cette direction périphérique l'élément de bloc profilé (19).

5. Profil de bande de roulement selon les caractéristiques de la revendication 4, dans lequel le prolongement (15) s'étend dans un évidement (16) réalisé de manière correspondante dans l'élément de bloc profilé adjacent (19).

6. Profil de bande de roulement selon les caractéristiques de la revendication 4 ou 5,
dans lequel le prolongement (15) est réalisé sous forme triangulaire ou trapézoïdale et un flanc du prolongement (15) fait partie de la paroi de rainure de la rainure périphérique (6).

7. Profil de bande de roulement selon les caractéristiques d'une ou plusieurs des revendications précédentes,
dans lequel, dans la première et la deuxième région d'épaulement sont réalisées à chaque fois une rangée de blocs profilés d'épaulement (1, 4) avec des éléments de blocs profilés d'épaulement (17, 20) séparés les uns des autres par des rainures transversales (8, 11) et disposés les uns derrière les autres dans la direction périphérique.

8. Profil de bande de roulement selon les caractéristiques de la revendication 7,
comprenant des entailles transversales notamment sinusoïdales (14) dans les éléments de blocs profilés d'épaulement (17, 20) avec une allure d'étendue orientée notamment parallèlement à l'étendue des rainures transversales (8, 11) séparant les éléments de blocs profilés d'épaulement (17, 20).

9. Profil de bande de roulement selon les caractéristiques de la revendication 7 ou 8, dans lequel les rainures transversales (8, 11) des rangées de blocs d'épaulement (1, 4) présentent, dans la région d'appui du pneu, le long de leur étendue axiale, une allure courbée avec une composante périphérique variant de manière continue et donc avec un pas variant de manière continue, l'allure du pas étant orientée notamment dans le sens inverse de l'allure du pas des rainures transversales (9, 10) réalisées dans une rangée de blocs profilés (2, 3) axiale adjacente dans leur transition aux rainures périphériques (5, 7) séparant la rangée de blocs profilés adjacente (2, 3) de la rangée de blocs d'épaulement (1, 4).

10. Profil de bande de roulement selon les caractéristiques d'une ou plusieurs des revendications précédentes,
dans lequel la rainure périphérique (6) limitant axialement la rangée de blocs profilés (3) sépare axialement la rangée de blocs profilés (3) d'une autre rangée de blocs profilés centrale (2), cette autre rangée de blocs profilés centrale (2) étant réalisée avec une symétrie spéculaire par rapport à la première rangée de blocs profilés (3) par symétrie miroir par rapport à un plan réalisé par la rainure périphérique (6) séparant les deux rangées de blocs profilés (2, 3).

11. Profil de bande de roulement selon les caractéristiques de la revendication 10, dans lequel l'autre rangée de blocs profilés centrale (2) est réalisée avec une symétrie miroir par rapport à la première rangée de blocs profilés (3) par symétrie miroir par rapport à un plan réalisé par la rainure périphérique (6) séparant les deux rangées de blocs profilés (2, 3) et par une symétrie miroir supplémentaire par rapport à l'axe de rotation de la roue du véhicule.

12. Profil de bande de roulement selon les caractéristiques de la revendication 10 ou 11, dans lequel l'autre rangée de blocs profilés centrale (2) est obtenue par une translation supplémentaire dans la direction périphérique du pneu de véhicule.

13. Profil de bande de roulement selon les caractéristiques de la revendication 10, 11 ou 12, dans lequel l'autre rangée de blocs profilés centrale (2) est obtenue par un étirage ou une compression supplémentaire de portions périphériques dans la direction périphérique du pneu de véhicule.
